(19) Europäisches Patentamt
European Patent Office
Office européen des brevets

(11) **EP 1 468 569 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(51) Int Cl.:
*H04N 7/50* (2006.01)    *H04N 7/64* (2006.01)
*H04N 7/26* (2006.01)

(21) Anmeldenummer: **03704244.7**

(22) Anmeldetag: **23.01.2003**

(86) Internationale Anmeldenummer:
**PCT/DE2003/000176**

(87) Internationale Veröffentlichungsnummer:
**WO 2003/063504 (31.07.2003 Gazette 2003/31)**

(54) **KODIERUNG VON BILDFOLGEN MIT EINER VIELZAHL VON BILDBLÖCKEN UND REFERENZBILDERN**

CODING OF IMAGE SEQUENCES WITH A PLURALITY OF IMAGE BLOCKS AND REFERENCE IMAGES

CODAGE DE SUITES D'IMAGES AU MOYEN D'UNE PLURALITE DE BLOCS IMAGE ET D'IMAGES DE REFERENCE

(84) Benannte Vertragsstaaten:
**DE ES FR GB IT**

(30) Priorität: **23.01.2002 DE 10202500**

(43) Veröffentlichungstag der Anmeldung:
**20.10.2004 Patentblatt 2004/43**

(73) Patentinhaber: **SIEMENS AKTIENGESELLSCHAFT**
**80333 München (DE)**

(72) Erfinder:
• **BÄSE, Gero**
**81371 München (DE)**
• **KONTOPODIS, Dimitrios**
**GR-157 72 Athen (GR)**
• **PANDEL, Jürgen**
**83620 Feldkirchen-Westerham (DE)**
• **STOCKHAMMER, Thomas**
**83346 Bergen (DE)**

(56) Entgegenhaltungen:
• **STOCKHAMMER, TH., KONTOPODIS, D.: "Error Robust Macroblock Mode and Reference Frame Selection (Document JVT.B102d1.doc)" JOINT VIDEO TEAM (JVT) OF ISO/IEC MPEG & ITU-T VCEG (ISO/IEC JTC1/SC29/WG11 AND ITU-T SG16 Q.6), 2ND MEETING GENEVA, CH, [Online] 29. Januar 2002 (2002-01-29) - 1. Februar 2002 (2002-02-01), Seiten 1-6, XP002243591 Geneva, CH Gefunden im Internet: <URL:http://standards.pictel.com/ftp/q6-si te/0201_Gen/JVT-B102d1.doc> [gefunden am 2003-06-05]**
• **STOCKHAMMER, TH., KONTOPODIS, D., WIEGAND, TH.: "Rate-Distortion Optimization for JVT/H.26L Video Coding in Packet Loss Environment" PROCEEDINGS 12TH INTERNATIONAL PACKET VIDEO WORKSHOP (PV 2002), 24. - 26. April 2002, Seiten 1-12, XP002243592 Pittsburgh, US**
• **LIAO J Y ET AL: "Adaptive intra update for video coding over noisy channels" PROCEEDINGS OF THE INTERNATIONAL CONFERENCE ON IMAGE PROCESSING (ICIP) LAUSANNE, SEPT. 16 - 19, 1996, NEW YORK, IEEE, US, Bd. 1, 16. September 1996 (1996-09-16), Seiten 763-766, XP010202506 ISBN: 0-7803-3259-8**

- **WIEGAND T ET AL: "ERROR-RESILIENT VIDEO TRANSMISSION USING LONG-TERM MEMORY MOTION-COMPENSATED PREDICTION" IEEE JOURNAL ON SELECTED AREAS IN COMMUNICATIONS, IEEE INC. NEW YORK, US, Bd. 18, Nr. 6, Juni 2000 (2000-06), Seiten 1050-1062, XP000915348 ISSN: 0733-8716 in der Anmeldung erwähnt**
- **ZHANG R ET AL: "VIDEO CODING WITH OPTIMAL INTER/INTRA-MODE SWITCHING FOR PACKET LOSS RESILIENCE" IEEE JOURNAL ON SELECTED AREAS IN COMMUNICATIONS, IEEE INC. NEW YORK, US, Bd. 18, Nr. 6, Juni 2000 (2000-06), Seiten 966-976, XP000954577 ISSN: 0733-8716 in der Anmeldung erwähnt**
- **COTE G ET AL: "OPTIMAL MODE SELECTION AND SYNCHRONIZATION FOR ROBUST VIDEO COMMUNICATIONS OVER ERROR-PRONE NETWORKS" IEEE JOURNAL ON SELECTED AREAS IN COMMUNICATIONS, IEEE INC. NEW YORK, US, Bd. 18, Nr. 6, Juni 2000 (2000-06), Seiten 952-965, XP001064930 ISSN: 0733-8716 in der Anmeldung erwähnt**
- **HASKELL P ET AL: "Resynchronization of motion compensated video affected by ATM cell loss" DIGITAL SIGNAL PROCESSING 2, ESTIMATION, VLSI. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, Bd. 5 CONF. 17, 23. März 1992 (1992-03-23), Seiten 545-548, XP010058890 ISBN: 0-7803-0532-9**

**Beschreibung**

Die Erfindung betrifft ein Verfahren zur Codierung einer Folge von digitalisierten Bildern mit einer Vielzahl von Bildblöcken sowie ein entsprechendes Decodierverfahren. Ferner betrifft die Erfindung entsprechende Codier- und Decodiervorrichtungen.

Aktuelle Videocodierstandards (siehe beispielsweise Dokument [1]) ermöglichen die Codierung von Bildsequenzen, wobei die für eine Bewegungsschätzung verwendeten Makrobildblöcke durch Intra-Codierungen aktualisiert werden. Hierdurch werden Fehlerfortpflanzungen bei Übertragungsfehlern in der Bildersequenz vermieden. Die Aktualisierungen mittels Intra-Codierungen können in regelmäßigen Abständen oder basierend auf vorgegebenen Kriterien vorgenommen werden. Ferner können bei aktuellen Videocodierverfahren Inter-Codierungen eingesetzt werden, welche sich auf mehrere zuvor codierte Referenzbilder zurückbeziehen. Es gibt jedoch keine Mechanismen, die eine effiziente Videocodierung mit Inter-Codierungen und Intra-Aktualisierungen über fehleranfällige Netze ermöglichen.

Die Druckschrift "Proc. Intl. Conf. On Image Processing ICIP, Lausanne, vol.1, 16.09.1996, pp.763-766 (Lio et al)" beschreibt ein Intra-Update Verfahren für die Videocodierung über fehlerbehaftete Kanäle. Dieses Verfahren analysiert die jeweilige Empfindlichkeit von Makroblöcken gegenüber Kanalfehler und gewinnt daraus eine Vorschrift für Intra-Updates.

Die Druckschrift "Proc. IEEE ICASSP, San Francisco, vol.5, 23.3.1992, pp. 545-548 (Haskell et al)" beschreibt mehrere mögliche Verfahren zur Resynchronisierung von bewegungskompensiertem Video, die durch ATM-Zellenverlust beeinträchtigt werden.

Aufgabe der Erfindung ist es deshalb, ein Verfahren zur Codierung einer Folge von digitalisierten Bildern bereitzustellen, welches eine Vielzahl von Intra- und Inter-Codiermodi sowie mehrere Referenzbilder verwendet und eine zuverlässige Rekonstruktion der digitalisierten Bilder in fehleranfälligen Netzen gewährleistet.

Diese Aufgabe wird gemäß den Merkmalen der unabhängigen Patentansprüche gelöst. Weiterbildungen der Erfindung ergeben sich aus den abhängigen Ansprüchen.

In dem erfindungsgemäßen Codierverfahren wird eine Folge von digitalisierten Bildern mit einer Vielzahl von Bildblöcken in fehleranfälligen Netzen codiert, wobei ein Teil der Makroblöcke der Bilder in Abhängigkeit von vorgegebenen Kriterien in einem ersten Intra-Codiermodus codiert werden. Ferner werden ein anderer Teil der Makroblöcke der Bilder in einem zweiten Intra-Codiermodus oder in einem Inter-Codiermodus codiert, wobei im Inter-Codiermodus für die Makroblöcke Bewegungsvektoren aus der Menge der zugänglichen Referenzbilder ausgewählt werden. Weiterhin wird die Auswahl aus der Menge der zugänglichen Referenzbilder derart beschränkt, dass von Bildbereichen referenziert wird, die später nicht dem ersten Intra-Codiermodus unterzogen wurden. Hierdurch wird vermieden, dass sich bei der Inter-Codierung auf Referenzbildbereiche bezogen wird, die nachfolgend zumindest teilweise einer Intra-Codierung unterzogen werden. Insbesondere wenn die Codierung im ersten Intra-Codiermodus aus Fehlerrobustheitsgründen zur Vermeidung von Fehlerfortpflanzungen bei fehlerhaften Übertragungen durchgeführt wird, ist hierdurch sichergestellt, dass sich nicht auf Bildbereiche bezogen wird, die fehlerhaft übertragen wurden. Es wird somit eine effiziente und zugleich fehlerrobuste Codierung in fehleranfälligen Netzen gewährleistet.

In einer Ausführungsform der Erfindung wird die Codierung im ersten Intra-Codiermodus in regelmäßigen zeitlichen Abständen durchgeführt. Alternativ kann die Codierung im ersten Intra-Codiermodus in zufälligen zeitlichen Abständen wiederholt werden.

In einer weiteren Ausgestaltung wird die Codierung in dem zweiten Intra-Codiermodus oder in dem Inter-Codiermodus aus Codiereffizienzgründen durchgeführt. Eine Intra-Codierung aufgrund von Codiereffizienzgründen kommt dabei insbesondere in Betracht, wenn ein Objekt in der Bilderfolge nur temporär in einigen Bildern auftaucht.

In einer bevorzugten Ausführungsform der Erfindung werden zur Beschränkung der Referenzbilder für die Codierung eines Makroblocks folgende Schritte durchgeführt. Für jeden Inter-Codierungsmodus wird aus der Menge der möglichen Intercodierungs-Modi und für jedes Referenzbild aus der Menge der zugänglichen Referenzbilder durch die ratenverzerrungsoptimierte Bewegungskompensation optimierte Bewegungsvektoren aus der Menge der möglichen Bewegungsvektoren ausgewählt. Aus einer kompletten Menge, die aus der möglichen Kombination von Inter-Codierungsmodus und Referenzbildern besteht, wird eine beschränkte Menge erstellt, wobei die Kombinationen entfernt werden, die in einem späteren Bild in einem ersten Intra-Codiermodus codiert wurden. Basierend auf der beschränkten Menge und einer Menge an Intra-Codiermodi wird die beste Kombination basierend auf Raten-Verzerrungs-Kriterien gebildet. Für den Fall, dass der Bildblock im vorhergehenden Schritt mit einem Intra-Codiermodus codiert wurde, wird in einem weiteren Schritt herausgefunden, ob der Bildblock intracodiert wurde aufgrund von Fehlerrobustheitskriterien (erster Intra-Codiermodus) oder aufgrund der Raten-Verzerrungs-Optimierung (zweiter Intra-Codiermodus). Es kann somit ein optimaler Codiermodus für die zu codierenden Makroblöcke bestimmt werden. Die Verwendung von Raten-Verzerrungs-Kriterien ist bereits hinlänglich aus dem Stand der Technik bekannt und beispielsweise in den Dokumenten [3] und [4] beschrieben.

In einer bevorzugten Ausgestaltung der Erfindung werden die Raten-Verzerrungs-Kriterien zur Bestimmung der besten Kombination in Abhängigkeit von einer zu erwartenden Fehlerrate bei der Übertragung der codierten Bilder bestimmt. Vorzugsweise umfasst zur Bestimmung der Raten-Verzerrungs-Kriterien die Verzerrung der Pixelwerte die Summe der quadratischen Differenzen zwischen den Pixelwerten vor der Codierung und den entsprechenden decodierten Pixelwerten. Da die Verzerrung bei der Codierung üblicherweise nicht bekannt ist, besteht in einer besonders bevorzugten Ausführungsform die Möglichkeit, zur Bestimmung der Raten-Verzerrungs-Kriterien eine Abschätzung der Verzerrung vorzunehmen.

Neben dem oben beschriebenen Codierverfahren betrifft die Erfindung ein entsprechendes Verfahren zur Decodierung einer Folge von digitalisierten Bildern in fehleranfälligen Netzen, wobei das Verfahren derart ausgestaltet ist, dass eine mit dem erfindungsgemäßen Codierverfahren codierte Folge von digitalisierten Bildern decodiert wird. In einer bevorzugten Ausführungsform des Decodierverfahrens wird bei der Decodierung eine Fehlerverschleierung verwendet.

Die Erfindung betrifft auch eine Vorrichtung zur Codierung einer Folge von digitalisierten Bildern in fehleranfälligen Netzen, wobei die Vorrichtung derart ausgestaltet ist, dass das oben beschriebene erfindungsgemäße Codierverfahren durchführbar ist. Ferner umfasst die Erfindung eine entsprechende Vorrichtung zur Decodierung von digitalisierten Bildern in fehleranfälligen Netzen, wobei die Vorrichtung derart ausgestaltet ist, dass das oben beschriebene Decodierverfahren durchführbar ist.

Ausführungsbeispiele der Erfindung werden nachfolgend anhand der beigefügten Zeichnungen erläutert.

Es zeigen

Fig. 1     den Ausschnitt aus einer Sequenz von decodierten Bildern, wobei die Bilder zuvor mit einem Verfahren gemäß dem Stand der Technik codiert wurden; und

Fig. 2     einen der Figur 1 entsprechenden Ausschnitt aus einer Sequenz von decodierten Bildern, wobei die Bilder zuvor mit dem erfindungsgemäßen Verfahren codiert wurden.

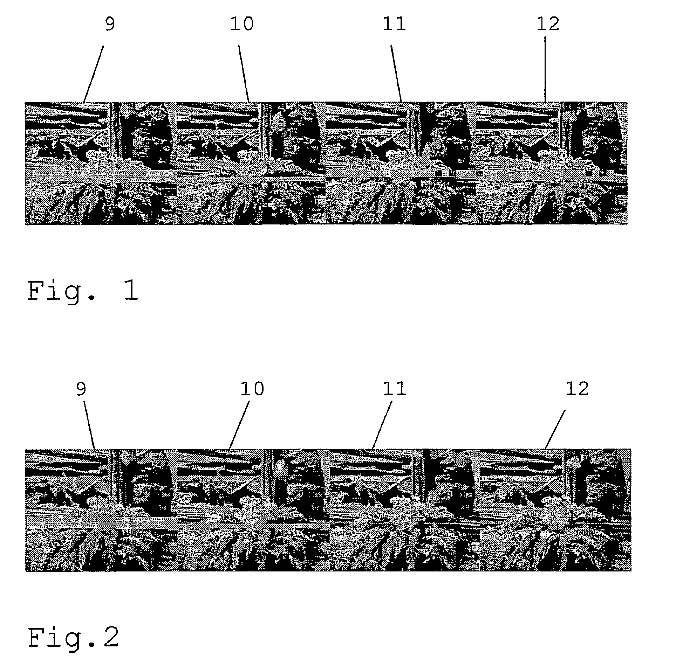

Die in Figur 1 dargestellte Bildersequenz wurde mit dem in Dokument [1] beschriebenen Encoder codiert, wobei dieser Encoder in regelmäßigen Abständen Intra-Aktualisierungen in einem Intra-Codiermodus durchführt, um eine Fehlerfortpflanzung im Falle einer fehlerhaften Übertragung der Bildersequenz im Decoder zu vermeiden. Die Intra-Aktualisierungen entsprechen den Codierungen in einem ersten Intra-Codiermodus entsprechend der Terminologie der Ansprüche.

Die Übertragung der Bildersequenz erfolgt über die Internet-Testmuster, die im Dokument [2] beschrieben sind. Die Bildersequenz wird hierbei in Datenpaketen übertragen, wobei ein Datenpaket aus zwei Zeilen von Bildblöcken besteht. Bildblöcke sind im folgenden sog. Makrobildblöcke, deren Verschiebung bei der Inter-Codierung mittels Bewegungsvektoren bestimmt wird. Das Codierverfahren, mit dem die in Figur 1 dargestellte Bildersequenz codiert wurde, umfasst ferner einen zweiten Intra-Codiermodus und einen Inter-Codiermodus im Sinne der Terminologie der Ansprüche. In dem Inter-Codiermodus wird eine Bewegungsschätzung in Bezug auf maximal fünf Referenzbildblöcke durchgeführt.

Der Ausschnitt der Bildersequenz zeigt die Bilder Nr. 9 bis Nr. 12 dieser Sequenz. Zur besseren Darstellung der Bildersequenz wurde ferner eine einfache Fehlerverschleierung mittels Grauwerten verwendet. Bei der Übertragung der Bildersequenz ging im ersten Bild der Sequenz ein Paket verloren. Dieser Übertragungsfehler ist noch im Bild Nr. 9 der Sequenz zu sehen, wie durch den horizontalen Streifen im Bild Nr. 9 der Figur 1 ersichtlich ist. In Bild Nr. 10 wird eine Intra-Aktualisierung eines Teils der Bildblöcke durchgeführt, so dass ein Teil des fehlerhaften Bildbereichs in Bild Nr. 10 verschwunden ist. In Bild Nr. 11 wurde eine Inter-Codierung mit Hilfe von Referenzbildern durchgeführt, wobei die Referenzbilder zeitlich vor Bild Nr. 10 liegen und somit nicht die Intra-Aktualisierung enthalten. Deshalb erscheint ein großer Teil des fehlerhaften Bereichs wieder in Bild Nr. 11. Das gleiche Phänomen tritt in Bild Nr. 12 auf. Durch dieses Phänomen wird nicht nur objektiv die Verzerrung im Bild erhöht, sondern der Effekt im Bild wird auch subjektiv als sehr störend empfunden.

Die oben beschriebenen Bildstörungen sind darauf zurückzuführen, dass bei der für die Sequenz der Figur 1 verwendeten Codierung eine erste Intra-Codierung mit einer Inter-Codierung verknüpft wird, die mehrfache Referenzbilder verwendet. Man könnte das Auftreten dieser Störungen vermeiden, indem nicht auf mehrfache Referenzbilder bei fehlerhaften Übertragungen zurückgegriffen wird, dies würde jedoch die Leistungsfähigkeit der Komprimierung erheblich senken.

Um die oben beschriebenen Störungen weitestgehend zu vermeiden, wird mit dem erfindungsgemäßen Codierverfahren eine Beschränkung der Referenzbilder dahingehend vorgenommen, dass bei der Inter-Codierung nur noch solche Referenzbildblöcke verwendet werden, die nach der Codierung des Referenzbildes keiner Intra-Aktualisierung unterzogen wurden. Die Ergebnisse des erfindungsgemäßen Verfahrens sind in Figur 2 dargestellt. Die Figur 2 zeigt die gleiche Bildersequenz wie die Figur 1 mit dem Unterschied, dass das erfindungsgemäße Codierverfahren verwendet wurde. Man sieht, dass die Bildstörungen in den Bildern Nr. 11 und Nr. 12 verschwunden sind. Dies liegt daran, dass bei der Inter-Codierung keine Referenzbilder herangezogen werden, die fehlerhaft zum Decoder übertragen werden. Die Bitratenzunahme, die sich durch das erfindungsgemäße Verfahren ergibt, ist relativ moderat und liegt bei lediglich 5 %.

Im Folgenden werden beispielhafte Ausführungsformen des erfindungsgemäßen Verfahrens im Detail beschrieben. Bei einer Ausführungsform des Verfahrens werden für jeden Makroblock-Codiermodus m aus der Menge von möglichen Inter-Codier-Modi Mp und für jedes Referenzbild r aus der Menge der zugänglichen Referenzbilder R optimale Bewegungsvektoren **v**(m, r) aus der Menge der Bewegungsvektoren **V**(m) für die Bewegungskompensation ausgewählt. Die Auswahl erfolgt nach Rate-Distortion-Kriterien. Mathematisch lassen sich die Rate-Distortion-Kriterien wie folgt darstellen:

$$v(m, r) = \arg\min_{v \in V(m)}(D_{DFD}(m, r, v) + \lambda_{Motion}R_{Motion}(m, r, v)) \qquad (1)$$

wobei $D_{DFD}$(**m, r, v**) die Verzerrung nach der Bewegungskompensation ist und $R_{motion}$(**m, r, v**) die Anzahl der Bits beinhaltet, die für die Codierung des jeweiligen Bewegungsvektors notwendig sind. Bei der Funktion (($D_{DFD}$(**m, r, v**) $+\lambda_{motion}R_{motion}$(m, r, v)) handelt es sich um eine sog. Lagrange-Kostenfunktion, die den Lagrange-Multiplikator $\lambda_{motion}$ beinhaltet. Diese Funktion wird minimiert, wodurch optimale Bewegungsvektoren hinsichtlich der Verzerrung und des Speicherbedarfs für den Bewegungsvektor ermittelt werden. Als erstes Ergebnis erhält man somit für jedes Referenzbild r und jeden Macroblock-Codiermodus m optimierte Bewegungsvektoren v(m, r).

In einem nächsten Schritt wird die Anzahl der Bewegungsvektoren beschränkt, indem Kombinationen aus der Menge bestehend aus Inter-Codier-Modi Mp und Referenzbilder R entfernt werden, bei denen von Bildbereichen referenziert wird, die später einer Intra-Aktualisierung, beispielsweise aus Fehlerrobustheitsgründen, unterzogen werden. Somit erhält man eine Menge Op von möglichen Werten m und r für die Bewegungsvektoren, die wie folgt lautet:

$$O_P = \left\{(m,r) \in \{M_P, R\} \middle| s_{\min fi}(v(m,r), f, k) \geq r \right\}, \qquad (2)$$

Wobei

k = 1, ..., K die Nummer eines Bildblocks ist;

**f** der Vektor {$f_1$, ...., $f_K$} ist, wobei die Variable fi die Zahl ist, die für den i-ten Bildblock die Nummer des Referenzbildes angibt, für das die letzte Intra-Aktualisierung durchgeführt wurde;

$s_{minfi}$(**v**(m,r),**f**,k) eine Operation ist, die für den Bildblock k in Abhängigkeit von **v**(m,r) und **f** die Nummer des Referenzbildes ermittelt, das aufgrund der Referenzbildbeschränkung das zuletzt erlaubte Referenzbild ist.

Ergibt sich, dass die Nummer des letzten erlaubten Referenzbildes größer als die Nummer des Referenzbildes r ist, handelt es sich um eine Kombination (m, r), deren Referenzbild innerhalb der Menge der durch das erfindungsgemäße Verfahren beschränkten Referenzbilder liegt. Sollte das letzte erlaubte Referenzbild kleiner als das Referenzbild r sein, wird die entsprechende Kombination (m, r) verworfen.

Die sich aus dem vorhergehenden Schritt ergebende beschränkte Menge Op von Referenzbildern und Inter-Codiermodi m wird mit einer Menge von im erfindungsgemäßen Verfahren verwendbaren Intra-Codiermodi $M_I$ kombiniert und aus der Vereinigungsmenge O = {$M_I$, $O_P$} wird wiederum mittels von Rate-Distortion-Kriterien der optimierte Codiermodus O(k) für jeden Makroblock k ermittelt. Falls dieser Macroblock gezwungenermaßen intra-codiert wird, zum Beispiel durch reguläre oder zufällige Intra-Aktualisierungen, dann wird die Menge der O beschränkt auf ausschließlich Intra-Modi, also O = $M_I$. Natürlich könnte man in diesem Fall die Bestimmung von Op auch weglassen. Mathematisch lassen sich das Rate-Distortion-Kriterien wiederum als Minimierungsproblem einer Lagrange-Kostenfunktion formulieren:

$$o(k) = \arg\min_{o \in O}(D(o) + \lambda_{Mode}R(o)), \qquad (3)$$

wobei R(o) die Anzahl der Bits beschreibt, um den Bildblock im Codiermodus o zu codieren, und D(o) die Verzerrung für diesen Codiermodus repräsentiert.

Falls in dem erfindungsgemäßen Verfahren eine regelmäßige oder zufällige Intra-Aktualisierung stattfindet, ergibt sich die Verzerrung als die Summe der quadratischen Differenzen zwischen dem ursprünglichen Bildblock und dem nach Decodierung erhaltenen Bildblock. Sollte die Intra-Aktualisierung auf der Basis einer weiter unten beschriebenen fehleroptimierten kanaladaptiven Codierung durchgeführt werden, ergibt sich die Verzerrung als der Erwartungswert der Verzerrung am Decoder.

In einem nächsten Schritt muss noch herausgefunden werden, ob ein intra-codierter Bildblock aufgrund von Fehlerrobustheitsgründen zur Vermeidung von Fehlerfortpflanzungen oder aus Codiereffizienzgründen intra-codiert wurde. Eine Intra-Codierung aus Codiereffizienzgründen liegt insbesondere dann vor, wenn ein Objekt in der Bildersequenz nur temporär auftaucht. Bei einer Intra-codierung aufgrund von Codiereffizienzgründen ist eine Referenzbildbeschränkung unerwünscht. Um die Gründe für die Intra-Codierung zu ermitteln, wird nochmals eine Rate-Distortion-Optimierung gemäß Gleichung (3) durchgeführt, wobei aber nun immer die gesamte Menge $O = \{M_I, O_P\}$ und als Verzerrungsmaß die Summe der quadratischen Differenzen zwischen dem ursprünglichen Bildblock und dem nach Decodierung erhaltenen Bildblock verwendet werden. Das Resultat der Optimierung wird als $\ddot{o}(k)$ bezeichnet. Es wird anschließend ein Fehlerrobustheitsflag $e_k$ gesetzt, wobei $e_k = \delta_{o(k) \neq \hat{o}(k)}$ und $\delta_{\text{Bedingung}}$ das Kronecker-Symbol ist, welches 1 ist, falls die Bedingung erfüllt ist und sonst den Wert 0 hat. Somit wurde die Intra-Codierung aus Fehlerrobustheitsgründen durchgeführt, wenn das Flag auf 1 gesetzt ist.

Wenn alle Bildblöcke eines Bildes verarbeitet worden sind, wird der Vektor **f** für alle Einträge $f_k$ aktualisiert, für die das Fehlerrobustheitsflag $e_k$ auf 1 gesetzt ist. Hierdurch wird eine Referenzbildbeschränkung für solche Intra-Codierungen vermieden, die aus Codiereffizienzgründen durchgeführt wurden und somit kann das Auftauchen und Verschwinden von Gegenständen durch die Codierung mit Hilfe mehrerer Referenzbilder effizient durchgeführt werden.

Nachfolgend wird eine Ausführungsform des erfindungsgemäßen Verfahrens beschrieben, bei der eine kanaladaptive Referenzbild-Auswahl auf der Basis von Rate-Distortion-Kriterien vorgenommen wird. Es ist hierzu notwendig, die Verzerrung $D(o)$ am Decoder abzuschätzen. Möglichkeiten zur Abschätzung dieser Verzerrung sind beispielsweise aus den Dokumenten [5], [6] und [7] bekannt. Eine Möglichkeit zur Ermittlung der Verzerrung ist die Einbeziehung des zufälligen Kanalverhaltens C bei der Abschätzung der Verzerrung. Das Kanalverhalten C nach der Übertragung eines Bildes n ist hierbei gegeben durch die binäre Sequenz $\{0, 1\}^{p(n)}$, wobei $p(n)$ die Anzahl der übertragenen Pakete ist, die notwendig sind, um die Bilder 1 bis n zu übertragen. Eine 0 in der Sequenz bezeichnet hierbei ein korrekt empfangenes Paket, wohingegen eine 1 ein verloren gegangenes Paket indiziert. Die Zufallsvariable, welche die binäre Sequenz bis zu Bild n beschreibt, wird als $C_{P(n)}$ bezeichnet. Die PixelVerzerrung am Decoder hängt von dem am Decoder rekonstruierten Pixel-Wert ab, der als $\hat{s}_i$ bezeichnet wird und welcher dem die Codierung durchführenden Encoder unbekannt ist. Die Pixelverzerrung hängt vom Kanalverhalten C und von dem ausgewählten Codiermodus O ab, d.h. $\hat{s}_i = \hat{s}_i(C_{p(n)}, o)$. Die Verzerrung wird als die Summe der Erwartungswerte der quadratischen Pixel-Verzerrungen $di(o)$ aller Makroblocks i abgeschätzt, wobei angenommen wird, dass dem Encoder das Kanalverhalten $C_{p(n)}$ bekannt. Für die Pixelverzerrung $di(o)$ für den Makroblock i ergibt sich:

$$d_i(o) = E_{C_{p(n-1)}}\left| s_i - \hat{s}_i\left(C_{p(n-1)}, o\right)\right|^2, \qquad (4)$$

wobei $E_{C_{P(n-1)}}$ den Erwartungswert der quadratischen Differenz des Original-Pixelwertes und des rekonstruierten Pixelwertes gemittelt über den Kanal $C_{p(n-1)}$ darstellt.

Zur Berechnung des Erwartungswertes kann folgende einfache Methode verwendet werden. Es wird angenommen, dass T Kopien der Zufallsvariable "Kanalverhalten" im Encoder zur Verfügung stehen. Diese Kopien werden als $C_{p(n)}(t)$ bezeichnet, mit $t = 1, ..., T$. Ferner wird angenommen, dass alle Zufallsvariablen $C_{P(n)}(t)$ identisch und statistisch unabhängig verteilt sind. Gemäß dem starken Gesetz für große Zahlen ergibt sich somit für $T \rightarrow \infty$:

$$\frac{1}{T}\sum_{t=1}^{T}\left| s_i - \hat{s}_i\left(C_{p(n)}(t), o\right)\right|^2 = E_{C_{p(n)}}\left| s_i - \hat{s}_i\left(C_{p(n)}, o\right)\right|^2 = d_i(o), \qquad (5)$$

Mit dem Ausdruck auf der linken Seite kann somit der Erwartungswert $di(o)$ abgeschätzt werden und in einem nächsten Schritt die erwartete Verzerrung $Di(o)$ berechnet werden. Die Rekonstruktion der Pixelwerte hängt vom Kanalverhalten $C_{p(n-1)}(t)$ sowie der Verschleierung im Decoder ab. Durch die zuletzt genannte Formel kann im Encoder abgeschätzt werden, wie stark die Verzerrung im Decoder sein wird.

Literaturverzeichnis:

[1] G. Bjontegaard, T. Wiegand, "H.26L Test Model Long Term Number 8 (TML-8) draft 0.", ITU-T VCEG, Doc. VCEG-N10, September 2001

[2] S. Wenger, "Common Conditions for the Intwrnet/H.323 Case",ITU-T VCEG (SG16/Q15), Doc. Q15-I-61, Ninth Meeting, Red Bank, NJ, October 1999

[3] T. Stockhammer, T. Oelbaum, D. Marpe, and T. Wiegand, "H.26L Simulation Results for Common Conditions for H.323/Internet Case", ITU-T VCEG (SG16/Q6), Doc. VCEG-N50, Fourteenth Meeting, Santa Barbara, CA, September 2001.

[4] G.J. Sullivan and T. Wiegand, "Rate-Distortion Optimization for Video Compression", IEEE Signal Processing Magazine, vol. 15, no. 6, pp. 74-90, Nov. 1998.

[5] R. Zhang, S. L. Regunathan, and K. Rose, "Video Coding with Optimal Inter/Intra-Mode Switching for Packet Loss Resilience", IEEE JSAC, vol. 18, no. 6, pp. 966-976.

[6] G. Cote, S. Shirani, F. Kossentini, "Optimal Mode Selection and Synchronization for Robust Video Communications over Error-Prone networks", IEEE JSAC, vol. 18, no. 6, pp. 952 -965.

[7] T. Wiegand, N. Färber, K. Stuhlmüller, and B. Girod, "Error-Resilient Video Transmission Using Long-Term Memory Motion-Compensated Prediction", in IEEE JSAC, vol. 18, no. 6, pp. 1050-1062.

**Patentansprüche**

1. Verfahren zur Referenzbildbeschränkung bei Codierung eines Makroblocks eines Bildes zur Verwendung in fehleranfälligen Netzen unter Verwendung mehrerer Referenzbilder und unter Verwendung mindestens eines Inter-Codierungsmodus unter Berücksichtigung einer ersten Menge ({Mp, R}) möglicher Kombinationen ((m, r)) aus jeweils einem der Inter-Codierungsmodi (Mp) und einem der zugänglichen Referenzbilder (R), wobei optimierte Bewegungsvektoren (v(m, r)) für die Kombinationen dieser ersten Menge ({Mp, R}) bestimmt werden und wobei jeder Bewegungsvektor (v(m, r)) einen Bildbereich in dem ihm zugeordneten Referenzbild referenziert,
   **dadurch gekennzeichnet, dass**
   aus der ersten Menge ({Mp, R}) eine beschränkte Menge (Op) ermittelt wird, indem diejenigen Kombinationen aus der ersten Menge ({Mp, R}) entfernt werden, bei denen der jeweilige Bewegungsvektor einen Bildbereich referenziert, der in mindestens einem dem zugeordneten Referenzbild zeitlich nachfolgenden Referenzbild zur Vermeidung von Fehlerfortpflanzung mit einem Intra-Codierungsmodus codiert wurde.

2. Verfahren nach Anspruch 1,
   **dadurch gekennzeichnet, dass**
   der jeweilige Bewegungsvektor derart bestimmt wird, dass eine Kostenfunktion für eine Verzerrung eines Makroblocks nach einer Bewegungskompensation und für einen Speicherplatzbedarf des Bewegungsvektors bei der Codierung minimiert wird.

3. Verfahren nach einem der Ansprüche 1 bis 2,
   **dadurch gekennzeichnet, dass**

   (a) durch Vereinigung der beschränkten Menge (Op) und einer Menge von Intra-Codiermodi ($M_l$) eine Vereinigungsmenge (O) gebildet wird, wobei, falls ein Makroblock gezwungenermaßen zur Vermeidung von Fehlerfortpflanzung intra-codiert wurde, die Vereinigungsmenge (O) auf die Menge von Intra-Codiermodi ($M_l$) beschränkt wird;
   (b) aus der Vereinigungsmenge (O) diejenige Kombination ausgewählt wird, bei der eine Kostenfunktion für eine Verzerrung eines Makroblocks durch die Codierung und eine Anzahl an Bits zur Codierung des Makroblocks minimiert werden.

**4.** Verfahren nach einem der vorhergehenden Ansprüche,
**dadurch gekennzeichnet, dass**
die Codierung eines Makroblocks mittels eines Intra-Codiermodus in regelmäßigen zeitlichen Abständen zur Vermeidung von Fehlerfortpflanzung durchgeführt wird.

**5.** Verfahren nach einem der Ansprüche 1 bis 3,
**dadurch gekennzeichnet, dass**
die Codierung eines Makroblocks mittels eines Intra-Codiermodus in zufälligen zeitlichen Abständen zur Vermeidung von Fehlerfortpflanzung durchgeführt wird.

**6.** Verfahren nach einem der Ansprüche 1 bis 3,
**dadurch gekennzeichnet, dass**
die Codierung eines Makroblocks aufgrund fehlerhafter Übertragung mittels eines Intra-Codiermodus erzwungen wird.

**7.** Verfahren nach einem der vorhergehenden Ansprüche,
**dadurch gekennzeichnet, dass**
ein Vektor (F) nach Codierung des Makroblocks aktualisiert wird, wobei dieser Vektor (F) angibt, ob dieser Makroblock unter Verwendung eines Intra-Codiermodus zur Vermeidung von Fehlerfortpflanzung codiert wurde.

**8.** Vorrichtung zur Codierung einer Folge von digitalisierten Bildern in fehleranfälligen Netzen, wobei die Vorrichtung derart ausgestaltet ist, ein Verfahren nach einem der Ansprüche 1 bis 7 durchzuführen.

**Claims**

**1.** Method for reference image limitation in coding a macro block of an image for use in error-prone networks using a number of reference images and using at least one inter-coding mode, taking into account a first set ($\{Mp, R\}$) of possible combinations (($m, r$)) from one of the inter-coding modes (Mp) respectively and one of the accessible reference images (R), with optimised motion vectors ($v(m, r)$) for the combination of this first set ($\{Mp, R\}$) being determined and with each motion vector ($v(m, r)$) referencing an image area in the to the motion vector assigned reference image,
**characterised in that**
a restricted set (Op) is determined from the first set ($\{Mp, R\}$) by those combinations from the first set ($\{Mp, R\}$) being removed in which the respective motion vector references an image area which was coded in at least one reference image following on in time from the assigned reference image to avoid propagation of errors with an intra-coding mode.

**2.** Method according to claim 1
**characterised in that**
the respective motion vector is determined such that a cost function for a distortion of a macro block after a motion compensation and for a memory space requirement of the motion vector is minimised in the coding.

**3.** Method according to one of claims 1 to 2
**characterised in that**

(a) by combining the restricted set (Op) and a set of intra-coding modes ($M_I$) a combination set (0) is formed, whereby, if a macro block was explicitly intra-coded for avoidance of error propagation, the combination set (0) will be restricted to the set of intra-coding modes ($M_I$) ;
(b) that combination is selected from the combination set (0) in which a cost function for a distortion of a macro block by the coding and a number of bits for coding the macro block will be minimised.

**4.** Method according to one of the previous claims
**characterised in that**
the coding of a macro block using an intra-coding mode is performed at regular chronological intervals to avoid error propagation.

**5.** Method according to one of claims 1 to 3

**characterised in that**

the coding of a macro block using an intra-coding mode is performed at random chronological intervals to avoid error propagation.

**6.** Method according to one of claims 1 to 3
**characterised in that**
the coding of a macro block is forced using an intra-coding mode because of incorrect transmission .

**7.** Method according to one of the previous claims
**characterised in that**
a vector (F) is updated after coding of the macro block, with this vector (F) specifying whether this macro block was coded using an intra-coding mode to avoid error propagation.

**8.** Device for coding a sequence of digitized images in error-prone networks, with the device being embodied for executing a method according to one of the claims 1 to 7.

**Revendications**

**1.** Procédé pour la restriction d'images de référence lors du codage d'un macrobloc d'une image pour l'utilisation dans des réseaux ayant tendance à des erreurs, sous l'utilisation de plusieurs images de référence et sous l'utilisation d'au moins un mode d'inter-codage tenant compte d'un premier ensemble ({Mp, R}) de combinaisons possibles ((m, r)) depuis respectivement un des modes d'inter-codage (Mp) et d'une des images de référence accessibles (R), dans lequel des vecteurs de mouvement optimisés (v(m, r)) sont déterminés pour les combinaisons de ce premier ensemble ({Mp, R}) et dans lequel chaque vecteur de mouvement (v(m, r)) référence une zone d'image dans l'image de référence qui lui est attribuée,
**caractérisé en ce que**
un ensemble restreint (Op) est déterminée à partir du premier ensemble ({Mp, R}) **en ce que** ces combinaisons-ci sont éliminées du premier ensemble ({Mp, R}), combinaisons dans lesquelles le vecteur de mouvement respectif référence une zone d'image qui a été codée avec un mode d'intra-codage dans au moins une image de référence suivant temporellement l'image de référence attribuée afin d'éviter une propagation des erreurs.

**2.** Procédé selon la revendication 1,
**caractérisé en ce que**
le vecteur de mouvement respectif est déterminé de telle sorte qu'une fonction des coûts est minimisée pour une distorsion d'un macrobloc après une compensation du mouvement et pour un besoin de mémoire du vecteur de mouvement lors du codage.

**3.** Procédé selon l'une des revendications 1 à 2,
**caractérisé en ce que**

(a) un ensemble de réunion (O) est formé par la réunion de l'ensemble restreint (Op) et d'un ensemble de modes d'intra-codage ($M_l$), l'ensemble de réunion (O) étant restreint à l'ensemble de modes d'intra-codage ($M_l$) si un macrobloc a été intra-codé de manière forcée pour éviter une propagation des erreurs ;
(b) la combinaison avec laquelle une fonction des coûts est minimisée pour une distorsion d'un macrobloc par le codage et avec laquelle un nombre de bits est minimisé pour le codage du macrobloc est sélectionnée depuis l'ensemble de réunion (O).

**4.** Procédé selon l'une des revendications précédentes,
**caractérisé en ce que**
le codage d'un macrobloc est exécuté au moyen d'un mode d'intra-codage à intervalles de temps réguliers pour éviter une propagation des erreurs.

**5.** Procédé selon l'une des revendications 1 à 3,
**caractérisé en ce que**
le codage d'un macrobloc est exécuté au moyen d'un mode d'intra-codage à intervalles de temps aléatoires pour éviter une propagation des erreurs.

**6.** Procédé selon l'une des revendications 1 à 3,
**caractérisé en ce que**
le codage d'un macrobloc est forcé au moyen d'un mode d'intra-codage en raison d'une transmission erronée.

**7.** Procédé selon l'une des revendications précédentes,
**caractérisé en ce que**
un vecteur (F) est actualisé après le codage du macrobloc, ce vecteur (F) indiquant si ce macrobloc a été codé sous l'utilisation d'un mode d'intra-codage pour éviter une propagation des erreurs.

**8.** Dispositif pour coder une suite d'images numérisées dans des réseaux ayant tendance à des erreurs, dans lequel le dispositif est réalisé de manière à exécuter un procédé selon l'une des revendications 1 à 7.

9    10    11    12

Fig. 1

9    10    11    12

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LIO.** *Proc. Intl. Conf. On Image Processing ICIP,* 16. September 1996, vol. 1, 763-766
- **HASKELL.** *Proc. IEEE ICASSP,* 23. Marz 1992, vol. 5, 545-548
- **G. BJONTEGAARD ; T. WIEGAND.** H.26L Test Model Long Term Number 8 (TML-8) draft 0. *ITU-T VCEG,* September 2001
- **S. WENGER.** Common Conditions for the Intwrnet/H.323 Case. *ITU-T VCEG,* Oktober 1999
- **T. STOCKHAMMER ; T. OELBAUM ; D. MARPE ; T. WIEGAND.** H.26L Simulation Results for Common Conditions for H.323/Internet Case. *ITU-T VCEG,* September 2001
- **G.J. SULLIVAN ; T. WIEGAND.** Rate-Distortion Optimization for Video Compression. *IEEE Signal Processing Magazine,* vol. 15 (6), 74-90
- **R. ZHANG ; S. L. REGUNATHAN ; K. ROSE.** Video Coding with Optimal Inter/Intra-Mode Switching for Packet Loss Resilience. *IEEE JSAC,* vol. 18 (6), 966-976
- **G. COTE ; S. SHIRANI ; F. KOSSENTINI.** Optimal Mode Selection and Synchronization for Robust Video Communications over Error-Prone networks. *IEEE JSAC,* vol. 18 (6), 952-965
- **T. WIEGAND ; N. FÄRBER ; K. STUHLMÜLLER ; B. GIROD.** Error-Resilient Video Transmission Using Long-Term Memory Motion-Compensated Prediction. *IEEE JSAC,* vol. 18 (6), 1050-1062